# EUROPÄISCHE PATENTSCHRIFT

(11) **EP 1 846 309 B1**
(45) Veröffentlichungstag und Bekanntmachung des Hinweises auf die Patenterteilung: **10.09.2008**
(21) Anmeldenummer: 07711349.6
(22) Anmeldetag: 18.01.2007
(51) Int. Cl.: B65G 1/127

(54) **VORRICHTUNG UND VERFAHREN ZUM SORTIEREN VON UNGEORDNETEN BEHÄTERN IN EINEM KOMMISSIONIERSYSTEM**
APPARATUS AND METHOD FOR SORTING UNORDERED CONTAINERS IN AN ORDER PICKING SYSTEM
DISPOSITIF ET PROCEDE DE TRI DE RECIPIENTS NON RANGES DANS UN SYSTEME DE PREPARATION DE COMMANDES

(30) Priorität: 19.01.2006 DE 102006003270
(43) Veröffentlichungstag der Anmeldung: 24.10.2007
(73) Patentinhaber: SSI Schäfer Peem GmbH, 8051 Graz-Gösting (AT)
(72) Erfinder: SCHÄFER, Gerhard, 57290 Neunkirchen (DE)
(74) Vertreter: Wegener, Markus
(86) Internationale Anmeldenummer: PCT/EP2007/000401
(87) Internationale Veröffentlichungsnummer: WO 2007/082741

(56) Entgegenhaltungen:
- EP-A1- 1 331 179
- DE-A1- 4 033 184
- DE-U1- 29 724 039

## Beschreibung

Die vorliegende Erfindung betrifft eine Vorrichtung zum Sortieren von ungeordneten Behältern eines Kommissioniersystems, ein entsprechend eingerichtetes Kommissioniersystem sowie ein Verfahren zum Sortieren von ungeordneten Behältern.

In gewöhnlichen Kommissioniersystemen werden Lagerbehälter aus einem Behälterlager zu Kommissionierplätzen transportiert, wo eine Kommissionierperson zu kommissionierende Artikel aus den Lagerbehältern entnimmt. Die Kommissionierperson gibt die entnommenen Artikel in einen Auftragsbehälter. Jedem Auftragsbehälter ist ein Kommissionierauftrag zugeordnet. Ein Auftrag enthält verschiedene Artikeltypen unterschiedlichster Anzahl, je nach Anforderung.

Damit ein Auftrag vollständig abgearbeitet, d.h. kommissioniert, werden kann, müssen Lagerbehälter, in denen die entsprechenden Artikel gelagert sind, aus dem Behälterlager geholt werden. Üblicherweise geschieht dies über eine Fördertechnik, wie z.B. Förderbänder, Rollbahnen, Hängeförderer etc. Die Auftragsbehälter werden ebenfalls über eine Fördertechnik zu den Kommissionierplätzen hin transportiert und von den Kommissionierplätzen abtransportiert. Diese Kommissionierart wird mit dem Begriff "Ware-zum-Mann" bezeichnet.

Somit kommt es zu einem relativ großen Verkehrsaufkommen von Behältern im Kommissioniersystem. Insbesondere die Lagerbehälter müssen dabei in einer (durch den Kommissionierauftrag) vorbestimmten Reihenfolge zum Kommissionierplatz transportiert werden. Am Kommissionierplatz ist üblicherweise eine Anzeigevorrichtung vorgesehen, die der Kommissionierperson anzeigt, wie viele Artikel aus dem gerade bereitgestellten Lagerbehälter zu entnehmen sind. Deshalb ist es wichtig, dass der richtige Lagerbehälter zum richtigen Zeitpunkt am richtigen Ort, insbesondere an einer Entnahmestelle des Kommissionierplatzes, bereitgestellt wird.

Eine vorrichtung zum sortieren von Behältern ist aust der DE 40 33 148 A1 bekannt.

Die Sortierung von Behältern ist insbesondere bei der Versandvorbereitung wichtig. In dieser Situation sollten die Behälter auf so genannten Versandstichbahnen, von denen sie z.B. von Fahrern zur sich daran anschließenden Auslieferung entnommen werden, in der richtigen (vorgegebenen) Reihenfolge geordnet sein.

Es versteht sich, dass nachfolgend unter dem Begriff "Behälter" auch Paletten, Tabletts und Ähnliches zu verstehen sind.

Aus dem Stand der Technik sind ferner seitlich zu einer Hauptförderstrecke angeordnete Abstellplätze bekannt. Mit solchen Abstellplätzen, die üblicherweise lediglich einen Behälter aufnehmen können, kann ein Behälter aus einer Folge von mehreren Behältern herausgenommen werden. Der herausgenommene Behälter wird auf dem Abstellplatz so lange zwischengelagert, bis alle anderen Behälter, die sich auf der Hauptstrecke befinden und die eigentlich in Förderrichtung vor dem abgestellten Behälter stehen sollten, den abgestellten Behälter passiert haben. Dann wird der abgestellte Behälter wieder in den Fluss von Behältern auf der Hauptförderstrecke zurückgegeben. Der abgestellte Behälter wird so bezüglich der Reihenfolge nach hinten verschoben.

Problematisch ist jedoch ein Verschieben eines Behälters nach vorn. Durch bloßes Herausziehen aus der Hauptförderstrecke kann ein Behälter effektiv keine Behälter überholen, die bereits vor ihm angeordnet sind.

Ein weiteres Problem besteht darin, dass es im Stand der Technik nicht möglich ist, gleichzeitig Behälter nach "vorn" und andere Behälter nach "hinten" zu verschieben.

Es ist daher eine Aufgabe der vorliegenden Erfindung, eine Sortiervorrichtung und ein Verfahren zum Sortieren von Behältern in einem Kommissioniersystem zu schaffen, das ein Überholen von Behälter innerhalb einer Behälterfolge ermöglicht, insbesondere wenn die Behälterfolge sehr viele Behälter enthält und viele dieser Behälter in einer falschen Reihenfolge angeordnet sind.

Diese Aufgabe wird mit einer Vorrichtung zum Sortieren von ungeordneten Behältern eines Kommissioniersystems gemäß einer vorbestimmten Reihenfolge gelöst. Das Kommissioniersystem umfasst eine Hauptförderstrecke, mit der die ungeordneten Behälter innerhalb des Kommissioniersystems, insbesondere zu einem Kommissionierplatz hin oder in ein Behälterlager hinein, transportiert werden, und zwar in einer Hauptförderrichtung. Die Sortiervorrichtung umfasst einen Förderstreckenkreisel, der über einen Einschleuspunkt zum Einschleusen von Behältern in den Förderstreckenkreisel und über einen Austauschpunkt zum Ausschleusen von in dem Förderstreckenkreisel befindlichen Behältern mit der Hauptförderstrecke verbindbar ist. Ferner umfasst die Sortiervorrichtung mindestens eine Transfereinrichtung, die so innerhalb des Förderstreckenkreisels angeordnet ist, dass Behälter zwischen einem ersten Austauschpunkt und einem zweiten Austauschpunkt des Förderstreckenkreisels austauschbar sind.

Diese Aufgabe wird ferner durch ein Verfahren zum Ordnen von Behältern gemäß einer vorbestimmten Reihenfolge in einem Kommissioniersystem gelöst, welches eine Sortiervorrichtung mit einem Förderstreckenkreisel und mit einer Transfereinrichtung aufweist, wobei der Förderstreckenkreisel über einen Einschleuspunkt und einen Ausschleuspunkt mit einer Hauptförderstrecke des Kommissioniersystems verbunden ist, und wobei die Transfereinrichtung einen ersten Austauschpunkt und einen zweiten Austauschpunkt des Förderstreckenkreisels miteinander verbindet, wobei das Verfahren die folgenden Schritte aufweist: Erfassen einer Reihenfolge von Behältern, die stromabwärts über die Hauptförderstrecke befördert werden; Überprüfen der erfassten Reihenfolge mit einer vorbestimmten Reihenfolge; sollten die Reihenfolgen nicht übereinstimmen, dann: Ausschleusen der Behälter, für die die Reihenfolge nicht stimmt, in den Förderstreckenkreisel; Ermitteln von Umsortierbefehlen, um die Transfereinrichtung und/oder die Ausschleuseinrichtung anzusteuern; Übermitteln der Umsortierbefehle an die Transfereinrichtung und/oder an die Ausschleuseinrichtung, und Ausführen derselben; und, sollten die Reihenfolgen übereinstimmen, Zurückkehren zu dem Schritt des Erfassens der Reihenfolge der Behälter.

Diese Art des Sortierens hat den Vorteil, dass viele Behälter, deren Reihenfolge falsch ist, umsortiert werden können. Die Sortierung erfolgt schnell. Die Behälter auf der Hauptförderstrecke bleiben im Fluss, da es insbesondere nicht mehr erforderlich ist, die Behälter auf der Hauptförderstrecke anzuhalten, um eine Lücke zu schaffen, in die hinein ein wiedereinzugliedernder Behälter bewegt werden kann. Dadurch erhöht sich der Durchsatz des Gesamtsystems.

Gemäß einer bevorzugten Ausführungsform ist der Ausschleuspunkt in Hauptförderrichtung stromaufwärts relativ zum Ausschleuspunkt gelegen. Insbesondere ist der erste Austauschpunkt in Hauptförderrichtung zwischen dem Ausschleuspunkt und dem Einschleuspunkt gelegen, und der zweite Austauschpunkt ist zwischen dem Einschleuspunkt und dem Ausschleuspunkt gelegen.

Auch von Vorteil ist es, wenn die Hauptförderstrecke einen Teil des Förderstreckenkreisels bildet.

Wenn die Hauptförderstrecke und der Kreisel einen gemeinsamen Abschnitt aufweisen, spart man sich zumindest einmal einen Förderstreckenabschnitt.

Jedoch kann es auch von Vorteil sein, wenn der Kreisel ein von der Hauptförderstrecke unabhängiger, in sich geschlossener Kreisel ist.

Bei dieser Ausgestaltung weisen der Kreisel und die Hauptförderstrecke lediglich einen gemeinsamen Schnittpunkt auf. Dieser gemeinsame Schnittpunkt wiederum entspricht sowohl dem Ein- als auch dem Ausschleuspunkt. Insbesondere entspricht dieser Punkt dem ersten Austauschpunkt. Somit ist lediglich eine einzige Einheit vorzusehen, die den Transfer von Behältern zwischen Hauptförderstrecke und Kreisel ermöglicht. Die Anzahl der Einschleuseinrichtungen und der Ausschleuseinrichtungen lässt sich reduzieren. Dies macht sich insbesondere bei den Anschaffungskosten bemerkbar.

Gemäß einer bevorzugten Ausgestaltung stimmen somit der Einschleuspunkt und der Ausschleuspunkt überein. Insbesondere der erste Austauschpunkt stimmt mit dem Ausschleuspunkt überein.

Von besonderem Vorteil ist es, wenn der Förderstreckenkreisel im Wesentlichen in einer horizontalen Ebene angeordnet ist.

Eine so ausgebildete Sortiervorrichtung kann in Räumen verwendet werden, die eine besonders geringe Deckenhöhe aufweisen, wie z.B. in Flughäfen, wo Gepäckstücke in Gebäudezwischenetagen transportiert werden, die nicht die übliche Mensch-hohe Höhe aufweisen.

Gemäß einer weiteren Ausgestaltung sind die Hauptförderstrecke und der Förderstreckenkreisel im Wesentlichen durch Rollbahnen, Gurtbänder oder Hängeförderer realisiert.

Es kann jedoch auch von Vorteil sein, wenn der Kreisel im Wesentlichen in einer vertikalen Ebene angeordnet ist. insbesondere in diesem Fall kann der Kreisel dann Paternoster-ähnlich aufgebaut sein.

Diese Ausgestaltung ist besonders dann von Nutzen, wenn wenig Platz, insbesondere seitlich zur Hauptförderstrecke, zur Verfügung steht. Die Umsortierung kann dann "in der Höhe" erfolgen.

Ferner hat es sich als vorteilhaft herausgestellt, wenn die Transfereinrichtung ein Überschieber ist, mit dem ein Behälter zwischen den Austauschpunkten verschoben werden kann.

Ein Überschieber ist technisch weniger anfällig als eine Rollbahn. Er lässt sich auch einfacher ersetzen als eine Rollbahn. Die Ansteuerung des Überschiebers ist einfach.

Gemäß einer weiteren Ausführungsform weist die Transfereinrichtung Motor-betriebene Förderrollen auf, die in zwei zueinander entgegengesetzten Richtungen angetrieben werden können.

Dadurch ist gewährleistet, dass Behälter zwischen den Austauschpunkten in beliebiger Richtung ausgetauscht werden können. Dazu ist dann nur eine einzige Vorrichtung nötig. Bei Verwendung von Überschiebern wären von denselben zwei notwendig.

Gemäß einer vorteilhaften Ausgestaltung weist der Förderstreckenkreisel ferner eine Abstellstrecke auf, auf der zu sortierende Behälter zwischengeparkt werden können.

Eine Abstellstrecke ist insbesondere dann von Vorteil, wenn mehrere Behälter bezüglich der Reihenfolge verschoben werden müssen. Diese Behälter können als Gruppe aus dem Hauptfluss auf der Hauptförderstrecke ausgeschleust werden. Andere Behälter können relativ zu der auf der Abstellstrecke befindlichen Gruppe verschoben und somit umsortiert werden. Anschließend kann die Gruppe wieder in den Hauptfluss integriert werden.

Ferner kann die Abstellstrecke gleichzeitig als Puffer für bereits vorsortierte Behälter genutzt werden.

Dabei ist es insbesondere von Vorteil, wenn für den Kreisel und die Abstellstrecke Motor-betriebene Förderrollen verwendet werden, die sowohl vorwärts drehen können als auch rückwärts drehen können.

Dies erleichtert das Bewegen nach vorn und nach hinten einer solchen Gruppe bezüglich einer tatsächlichen Reihenfolge.

Ferner ist es bevorzugt, wenn nur eine einzige Transfereinrichtung vorgesehen ist.

Eine einzige Transfereinrichtung begrenzt den Rechenaufwand, der mit einem Umsortieren von Behältern verbunden ist, da die Anzahl von Möglichkeiten bzw. von Orten reduziert ist, bei denen Überholmanöver ausgeführt werden können.

Ferner ist es bevorzugt, wenn die Sortiervorrichtung gemäß der vorliegenden Erfindung in einem Kommissioniersystem eingesetzt wird, wobei die Sortiervorrichtung mit einer Hauptförderstrecke verbunden ist.

Nach einer bevorzugten Ausführungsform weist das Kommissioniersystem eine erste Erfassungseinrichtung stromaufwärts relativ zur Sortiervorrichtung auf.

Die erste Erfassungseinrichtung wird verwendet, um die tatsächliche Reihenfolge der ankommenden Behälter festzustellen. Basierend auf dieser festgestellten Reihenfolge kann anschließend ein Vergleich mit der vorbestimmten Reihenfolge durchgeführt werden, um zu bestimmen, ob umsortiert werden muss.

Gemäß einer bevorzugten Ausführungsform ist stromaufwärts relativ zum Einschleuspunkt eine zweite Erfassungseinrichtung vorgesehen.

Diese zweite Erfassungseinrichtung dient dazu, einen in den Kreisel einzuschleusenden Behälter zu identifizieren, damit die stromabwärts gelegene Einschleuseinrichtung diesen Behälter auch tatsächlich in den Kreisel einschleust.

Von Vorteil ist auch eine dritte Erfassungseinrichtung im Bereich des ersten Austauschpunkts.

Auch hier erfolgt eine Identifizierung eines in den Kreisel einzuschleusenden Behälters.

Gemäß einer weiteren bevorzugten Ausführungsform ist im Bereich des zweiten Austauschpunkts eine vierte Erfassungseinrichtung vorgesehen.

Die vierte Erfassungseinrichtung dient zum Identifizieren eines Behälters, der zum ersten Austauschpunkt, und somit in der Regel auch wieder in den Hauptfluss, zurücktransportiert werden soll.

Gemäß einer weiteren Ausführungsform des erfindungsgemäßen Verfahrens umfasst der Schritt des Ausführens der Umsortierbefehle folgende Schritte: Einschleusen aller umzusortierenden Behälter in den Kreisel; Identifizieren der umzusortierenden Behälter im Bereich des zweiten Austauschpunkts; wenn ein in der Reihenfolge nach vorn zu sortierender Behälter den zweiten Austauschpunkt erreicht, Betätigen der Transfereinrichtung, um diesen Behälter vom zweiten Austauschpunkt zum ersten Austauschpunkt zu transportieren und ihn dort wieder in die Hauptförderstrecke einzuschleusen; anderenfalls Weiterleiten der Behälter, die nicht in der Reihenfolge nach vorn sortiert werden müssen, innerhalb des Kreisels zum Ausschleuspunkt des Kreisels; und Ausschleusen der Behälter, die sich noch innerhalb des Kreisels befinden, über die Ausschleuseinrichtung in die Hauptförderstrecke.

Ferner ist es bevorzugt, wenn der Schritt des Ausführens der Umsortierbefehle die weiteren Schritte umfasst: Identifizieren der umzusortierenden Behälter in einem Bereich des ersten Austauschpunkts; wenn ein in der Reihenfolge nach vorn zu sortierender Behälter den ersten Austauschpunkt erreicht, Betätigen der Transfereinrichtung, um diesen Behälter vom ersten Austauschpunkt zum zweiten Austauschpunkt zu transportieren und um ihn dort in den Kreisel einzuschleusen und ihn an den Ausschleuspunkt weiterzuleiten; anderenfalls Weiterleiten der Behälter, die in der Reihenfolge nach vorn sortiert werden müssen, zum Einschleuspunkt des Kreisels, um sie in den Kreisel einzuschleusen und an den Ausschleuspunkt weiterzuleiten; und Ausschleusen der am Ausschleuspunkt befindlichen Behälter in die Hauptförderstrecke.

Die zuvor erwähnten Verfahrensschritte können insbesondere miteinander vermischt werden.

Auch ist es bevorzugt, wenn die Behälter innerhalb des Kreisels vorwärts und rückwärts bezüglich der Hauptförderrichtung verfahren werden.

Dies ermöglicht die Erzeugung von größeren oder kleineren Lücken zwischen den Behältern im Kreisel.

Ferner ist es bevorzugt, wenn die Hauptförderstrecke und der Förderstreckenkreisel aus Förderstreckensegmenten aufgebaut sind, die mit variabler Fördergeschwindigkeit betrieben werden. Die Behälter können so beschleunigt oder verlangsamt transportiert werden, womit sich Lücken in der Reihenfolge der Behälter ergeben oder Lücken geschlossen werden. Dies ist insbesondere dann wichtig, wenn zwischen Behältern auf der Hauptförderstrecke kein Platz ist, um Behälter aus dem Kreisel wieder in die Hauptförderstrecke zu integrieren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Draufsicht auf eine schematische Sortiervorrichtung gemäß der vorliegenden Erfindung, die exemplarisch an einer Hauptförderstrecke eines Kommissioniersystems angeschlossen ist;
- Fig. 2a bis 2e: einen schematisierten Ablauf zum Sortieren von sieben Behältern, die ursprünglich in einer falschen Reihenfolge bereitgestellt werden;
- Fig. 2f und 2g: eine Alternative zu den Verfahrensschritten, wie sie in den Fig. 2b und c dargestellt sind;
- Fig. 3: eine schematische Draufsicht auf eine weitere Ausführungsform einer Sortiervorrichtung gemäß der vorliegenden Erfindung;
- Fig. 4: eine schematische Seitenansicht einer weiteren Sortiervorrichtung gemäß der Erfindung, die in die Höhe baut; und
- Fig. 5: ein Flussdiagramm des Verfahrens gemäß der vorliegenden Erfindung.

In den nachfolgenden Figuren werden gleiche Elemente mit den gleichen Bezugszeichen versehen. Die Sortiervorrichtung gemäß der Erfindung wird allgemein mit dem Bezugszeichen 10 bezeichnet, wobei abgewandelte Ausführungsformen durch Punktierung kenntlich gemacht werden.

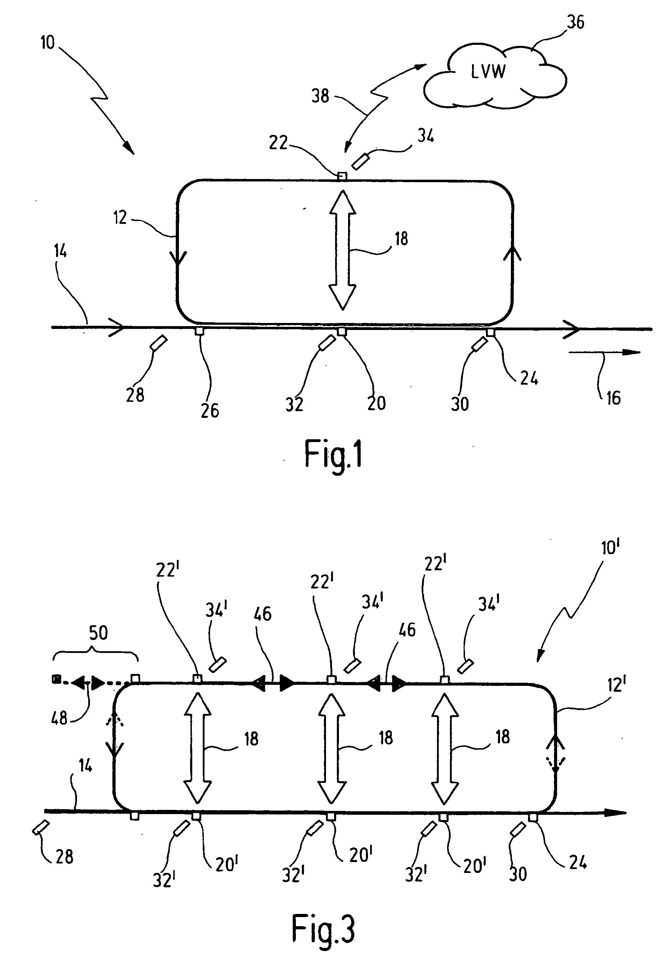

In Fig. 1 ist eine Sortiervorrichtung 10 gemäß der vorliegenden Erfindung gezeigt. Die Sortiervorrichtung 10 umfasst einen Förderstreckenkreisel 12. Der Förderstreckenkreisel 12 kann eine Rollbahn, Förderbänder, Hängeförderer oder Ähnliches sein. Der Förderstreckenkreisel 12, der nachfolgend auch als Kreisel bezeichnet werden wird, ist mit einer Hauptförderstrecke 14 verbunden, die aus ähnlichen oder gleichen Komponenten wie der Kreisel 12 gebildet sein kann.

Die Hauptförderstrecke 14 wird in dem Beispiel der Fig. 1 von links nach rechts betrieben, um (hier nicht dargestellte) Behälter zu fördern. Die Hauptförderrichtung ist durch einen Pfeil 16 dargestellt. Die Hauptförderstrecke 14 verbindet üblicherweise ein Behälterregal (nicht dargestellt) eines Kommissioniersystems (nicht dargestellt) mit (nicht dargestellten) Kommissionierplätzen, an denen dann die tatsächliche Kommissionierung erfolgt, und umgekehrt.

Bezug nehmend auf den Kreisel 12 ist des Weiteren eine innerhalb des Kreisels 12 angeordnete Transfereinrichtung 18 gezeigt, die durch einen Doppelpfeil veranschaulicht ist. Die Transfereinrichtung 18 lässt sich hier in den durch den Pfeil 18 angedeuteten Richtungen betätigen. Die Transfereinrichtung 18 könnte jedoch auch lediglich in einer Richtung betätigbar sein. Dies ist z.B. dann der Fall, wenn die Transfereinrichtung 18 ein Überschieber ist.

Die in Fig. 1 gezeigte Transfereinrichtung 18 verbindet einen ersten Transferpunkt 20 mit einem zweiten Transferpunkt 22 des Kreisels 12. Zwischen den Transferpunkten 20 und 22 können Behälter in beliebiger Richtung verschoben werden. Über einen Einschleuspunkt 24 werden die Behälter in den Kreisel eingeschleust, und über den Ausschleuspunkt 26 werden die Behälter aus dem Kreisel ausgeschleust bzw. in die Hauptförderstrecke wieder eingeschleust. Dazu sind hier nicht näher erläuterte Einschleuseinrichtungen und Ausschleuseinrichtungen vorgesehen.

Bei dem in Fig. 1 veranschaulichten Beispiel ist der Kreisel 12 eine in sich geschlossene Schleife. Jedoch könnte der Kreisel 12 auch einen gemeinsamen Abschnitt mit der Hauptförderstrecke 14 haben, nämlich dann, wenn die Strecke zwischen dem Ausschleuspunkt 26 und dem Einschleuspunkt 24 nur einmal vorgesehen ist und sowohl von der Hauptförderstrecke 14 als auch vom Kreisel 12 gemeinsam benutzt wird.

Besonders von Vorteil ist es, wenn der erste Austauschpunkt 20 ebenfalls über eine Einschleuseinrichtung und eine Ausschleuseinrichtung verfügt. So kann die Transfereinrichtung 18 Behälter 40 von der Hauptförderstrecke 14 in den Kreisel 12 einschleusen bzw. umgekehrt, Behälter 40 aus dem Kreisel 12 ausschleusen, um sie in die Hauptförderstrecke 14 einzuschleusen.

Um überhaupt feststellen zu können, in welcher Reihenfolge Behälter generell in Richtung des Kreisels 12 transportiert werden, ist stromaufwärts zum Kreisel 12 z.B. ein erster Scanner 28 vorgesehen. Bei dem Scanner 28 kann es sich um einen Barcodescanner handeln, der Barcodes liest, die an jedem Behälter angebracht sind. Über den Barcode kann ein Behälter identifiziert werden.

Es versteht sich, dass auch andere Identifizierungsmittel eingesetzt werden könnten. So könnte jeder Behälter 40 z.B. einen Transponder mit eigener Frequenz bzw. eigenem Code aufweisen, um sich so gegenüber einer Leseeinrichtung 28 zu identifizieren.

Ein weiterer Scanner 30 kann stromaufwärts relativ zum Einschleuspunkt 24 vorgesehen werden, um solche Behälter zu identifizieren, die in den Kreisel 12 einzuschleusen sind. Ähnliches gilt für die Transfereinrichtung 18. Stromaufwärts relativ zum ersten Austauschpunkt 20 kann ein weiterer Scanner 32 vorgesehen sein. Der Scanner 32 kann Behälter identifizieren, die entweder im Kreisel 12 oder auf der Hauptförderstrecke 14 transportiert werden. Passiert ein Behälter, der vom ersten Austauschpunkt 20 zum zweiten Austauschpunkt 22 zu bewegen ist, den Scanner 32, so gibt dieser ein entsprechendes Signal 32 an eine noch näher zu beschreibende übergeordnete Einheit aus, die dann eine entsprechende Transferbewegung einleitet. Ähnliches gilt für einen aus dem Kreisel 12 auszuschleusenden Behälter.

Um auch einen Transfer zwischen dem zweiten Austauschpunkt 22 und dem ersten Austauschpunkt 20 initiieren zu können, kann ein weiterer Scanner 34 stromaufwärts relativ zum zweiten Austauschpunkt 22 vorgesehen sein.

Jegliche Aktion im Kreisel 12, sei es ein Einschleusen, ein Ausschleusen oder ein Verschieben, wird von einem übergeordneten Lagerverwaltungssystem 36 gesteuert, die in Fig. 1 in Form einer Wolke veranschaulicht ist.

Die Kommunikation zwischen dem Lagerverwaltungssystem 36 und den einzelnen Stellelementen 20-26 kann drahtlos erfolgen, wie es exemplarisch durch einen Pfeil 38 angedeutet ist. Die Verbindung kann jedoch auch über Leitungen, insbesondere über ein Bussystem (z.B. Profibus), erfolgen.

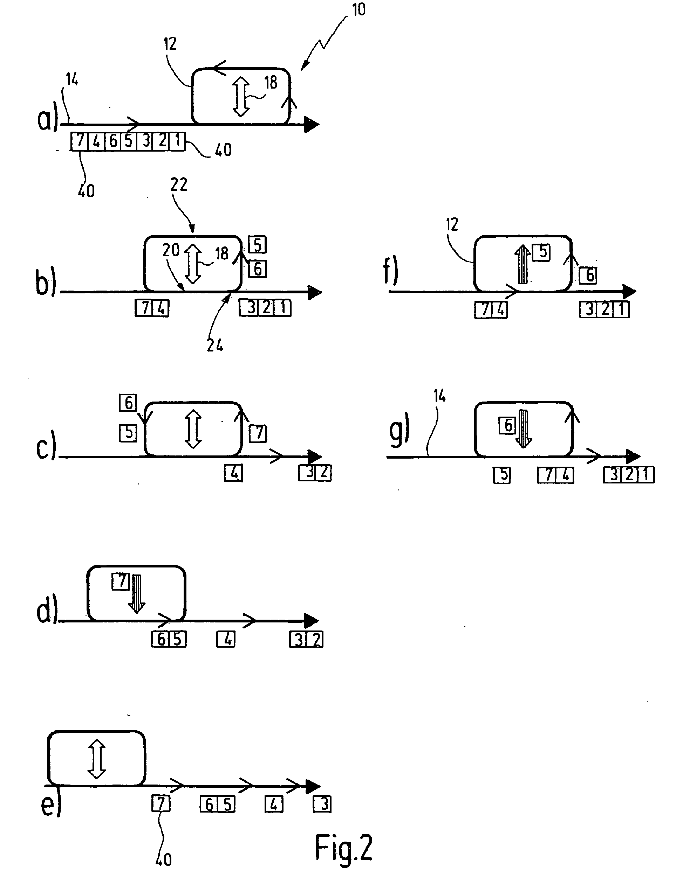

Ein Sortiervorgang gemäß der vorliegenden Erfindung wird nachfolgend anhand der Fig. 2a bis 2e beschrieben werden. Die in der Fig. 2 verwendete Sortiervorrichtung 10 entspricht der Sortiervorrichtung, wie sie in Fig. 1 gezeigt ist, wobei sich der Kreisel 12 und die Hauptförderstrecke 14 einen gemeinsamen Abschnitt (vgl. Strecke zwischen Punkt 26 und 24 in Fig. 1) teilen. Die Hauptförderrichtung verläuft weiterhin von links nach rechts. Die Hauptförderrichtung innerhalb des Kreisels 12 erfolgt gegen den Uhrzeigersinn. Die Transfereinrichtung 18 ermöglicht Behälterbewegungen zwischen den beiden Transferpunkten. Aus Gründen der Vereinfachung sind in den einzelnen Darstellungen der Fig. 2 nicht immer alle Bezugszeichen enthalten, woraus man jedoch nicht schließen kann, dass die in Fig. 1 gezeigten Elemente nicht vorhanden sind.

In Fig. 2a ist eine beispielhafte Ausgangssituation gezeigt, bei der sieben Behälter 40 auf der Hauptförderstrecke 14 in Richtung des Kreisels 12 transportiert werden. Die Behälter 40 sind von rechts nach links mit den Ziffern 1 bis 7 nummeriert. Man erkennt, dass die ersten drei Behälter in der richtigen Reihenfolge angeordnet sind. Dem Behälter Nr. 3 folgt jedoch nicht der Behälter Nr. 4, sondern die Behälter Nr. 5 und Nr. 6. Der Behälter Nr. 4 wiederum folgt dem Behälter Nr. 6. Dies bedeutet, der Behälter Nr. 4 sollte die Behälter Nr. 5 und Nr. 6 überholen, so dass die sieben Behälter 40 in der richtigen Reihenfolge angeordnet sind. Der Behälter Nr. 4 muss also um zwei Plätze nach vorn bewegt werden. Es versteht sich, dass lediglich aus Veranschaulichungszwecken nur so wenige Behälter dargestellt sind. Das erfindungsgemäße System kann viel mehr Behälter gleichzeitig handhaben.

In Fig. 2b ist die Situation gezeigt, bei der die ersten drei Behälter 40 den Kreisel 12 bereits passiert haben. Zuvor wurde mittels des Scanners 28 die Behälterreihenfolge vor dem Kreisel 12 festgestellt und an das in Fig. 2 nicht dargestellte Lagerverwaltungssystem 36 weitergeleitet, welches z.B. durch einen Großrechner implementiert sein kann. Das Lagerverwaltungssystem 36 ist mit Mitteln zum Berechnen von entsprechenden Anweisungen ausgestattet, um auf optimale Weise die "falsche" Reihenfolge durch Umsortierbefehle zu korrigieren. Diese Rechenoperationen erfordern natürlich eine gewisse Zeit, so dass es besonders bevorzugt ist, wenn der Scanner 28 (vgl. Fig. 1) relativ weit stromaufwärts gegenüber dem Kreisel 12 angeordnet ist.

Ferner ist in Fig. 2b zu erkennen, dass die Behälter Nr. 5 und Nr. 6 über den Einschleuspunkt 24 in den in Fig. 2 rechts gelegenen Ast des Kreisels 12 eingeschleust wurden. Die Behälter Nr. 4 und Nr. 7 befinden sich stromaufwärts relativ zum ersten Austauschpunkt 20.

Fig. 2c zeigt die Situation, bei der der Behälter Nr. 4, nachdem er durch den Scanner 32 (vgl. Fig. 1) gelesen wurde, am ersten Austauschpunkt 20 vorbeigelassen wurde. Der Behälter Nr. 7 hingegen wurde nach entsprechender Identifikation am Einschleuspunkt 24 in den rechten Ast des Kreisels 12 eingeschleust. Die Behälter Nr. 5 und Nr. 6 sind zwischenzeitlich im Kreisel 12 zu dessen linkem Ast weitergewandert.

Wenig später ergibt sich die Situation, wie sie in Fig. 2d dargestellt ist. Die Behälter Nr. 5 und Nr. 6 wurden über den Ausschleuspunkt 26 aus dem Kreisel 12 ausgeschleust bzw. in die Hauptförderstrecke 14 wieder eingeschleust. Der Behälter Nr. 7 kann über die Transfereinrichtung 18 bereits vom zweiten Austauschpunkt 22 in Richtung des ersten Austauschpunktes 20 bewegt werden, um nicht den Rest des Kreisels 12 durchlaufen zu müssen. Die Bewegung des Behälters Nr. 7 auf der Transfereinrichtung 18 vom zweiten Austauschpunkt 22 zum ersten Austauschpunkt 20 ist in Fig. 2d durch einen dunkel schraffierten Pfeil verdeutlicht.

Wenig später ergibt sich die Situation, wie sie in Fig. 2e dargestellt ist. Der Behälter Nr. 7 ist über den ersten Austauschpunkt 20 wieder in die Hauptförderstrecke 14 integriert worden. Alle Behälter 40 befinden sich nun in der richtigen Reihenfolge. Der Behälter Nr. 4 wurde um zwei Plätze nach vorn bewegt.

Ferner ist in den Fig. 2a bis 2e zu erkennen, dass durch die verschiedenen Aktionen Lücken zwischen den Behältern 40 geschaffen wurden. Dies tritt jedoch nur dann auf, wenn die Hauptförderstrecke 14 mit einer konstanten Geschwindigkeit, d.h. ohne Unterbrechung, angetrieben wird. Hier ist es von Vorteil, dass der Behälterfluss auf der Hauptförderstrecke nicht unterbrochen wird. Dies ist insbesondere dann wichtig, wenn mehrere Kommissionierplätze an die Hauptförderstrecke 14 angeschlossen sind. Eine Unterbrechung des Hauptfluss hätte ein Unterversorgen der Kommissionierplätze zur Folge, was es unbedingt zu verhindern gilt. Dies ist insbesondere dann von Interesse, wenn viele Kommissionierplätze gleichzeitig mit Behältern von der Hauptförderstrecke 14 versorgt werden. In diesem Fall vermischen sich häufig Behälter, die zu einem Kommissionierplatz gehören, mit Behältern, die zu anderen Kommissionierplätzen gehören.

Ferner ist festzustellen, dass durch die Transfereinrichtung 18 die Länge des in dem Kreisel 12 zurückzulegenden Weges variiert werden kann. Die Behälter Nr. 5 und Nr. 6 können den Kreisel 12 z.B. vollständig durchlaufen. Der Behälter Nr. 7 hat jedoch einen viel kürzeren Weg im Kreisel 12 zurückgelegt, da er mittels der Transfereinrichtung 18 bereits vorzeitig wieder in die Hauptförderstrecke 14 integriert wurde.

Durch die Transfereinrichtung 18 eröffnet sich ein weites Feld an Möglichkeiten, wie die Behälter 40 umsortiert werden können, insbesondere wie groß die Lücken zwischen den Behältern 40 auf der Hauptförderstrecke 14 sind, nachdem sie die Sortiervorrichtung 10 passiert haben.

In den Fig. 2f und 2g sind Alternativen zu den in den Fig. 2b und 2c dargestellten Situationen aufgezeigt.

Anstatt die Behälter Nr. 5 und Nr. 6 in den rechten Ast des Kreisels 12 zu bewegen, wie es in Fig. 2b veranschaulicht ist, hätte man den Behälter Nr. 5 auch unter Verwendung der Transfereinrichtung 15 aus der Hauptförderstrecke 14 ausschleusen können. Diese Alternative ist in Fig. 2f dargestellt. Der Behälter Nr. 6 ist hier über den Einschleuspunkt 24 in den rechten Ast des Kreisels 12 eingeschleust worden.

Wie in Fig. 2g zu sehen, kann der Behälter Nr. 5 dann den linken Ast des Kreisels 12 durchlaufen, um über den Austauschpunkt 26 aus dem Kreisel 12 direkt hinter dem Behälter Nr. 7 ausgeschleust zu werden. Der Behälter Nr. 7 wird am Einschleuspunkt 7 in den Kreisel 12 eingeschleust. Wenig später hat der Behälter Nr. 5 den ersten Austauschpunkt 20 passiert, so dass der Behälter Nr. 6 über die Transfereinrichtung 18 wieder in die Hauptförderstrecke 14 integriert werden kann, während der Behälter Nr. 7 den rechten Ast des Kreisels 12 durchlaufen und über die Transfereinrichtung 18 in die Hauptförderstrecke 14 integriert werden muss.

Wenn man den Umsortiervorgang auf diese (alternative) Weise vornimmt, ergeben sich logischerweise andere Lücken zwischen den Behältern auf der Hauptförderstrecke 14, insbesondere dann, wenn die Hauptförderstrecke 14 mit konstanter Geschwindigkeit ohne Unterbrechung betrieben wird.

Dem Fachmann ist klar, dass sich hier eine große Mannigfaltigkeit von Möglichkeiten eröffnet, wie Behälter am geschicktesten sortiert werden können. Diese Mannigfaltigkeit erhöht sich ferner, wenn man sich die Sortiervorrichtung 10' der Fig. 3 betrachtet.

Bei der Sortiervorrichtung 10' der Fig. 3 sind mehrere Transfereinrichtungen 18, hier insgesamt drei, dargestellt. Jeder Transfereinrichtung 18 ist ein erster Austauschpunkt 20' sowie ein zweiter Austauschpunkt 22' zugeordnet. Jedem der Austauschpunkte 20' bzw. 22' kann wiederum jeweils ein Scanner 32' bzw. 34' zugeordnet sein. Der Kreisel 12' der Fig. 3 unterscheidet sich vom Kreisel 12 der Fig. 1 u.a. dadurch, dass die verwendete Fördertechnik in zueinander entgegengesetzten Richtungen bewegt werden kann, wie es exemplarisch durch die Doppelpfeile 46 angedeutet ist. Diese Funktionalität kann im gesamten Kreisel 12' vorgesehen sein. Alternativ können lediglich einige Abschnitte des Kreisels 12' in beiden Richtungen beweglich sein, wie z.B. die Förderstreckenabschnitte zwischen den jeweiligen zweiten Austauschpunkten 22'.

Optional kann des Weiteren eine Abstellstrecke 50 vorgesehen werden, die in Fig. 3 punktiert dargestellt ist. Die Abstellstrecke 50 kann ebenfalls in beiden Richtungen verfahren bzw. betätigt werden (vgl. Pfeil 48). Bei dieser Ausgestaltung der Sortiervorrichtung hat sich insbesondere die Verwendung von Motor-betriebenen Förderrollen bewährt. Auf der Abstellstrecke 50 können ganze Gruppen von Behältern 40 (hier nicht dargestellt) "zwischengeparkt" werden. Angenommen, eine derart zwischengeparkte Gruppe von Behältern müsste relativ weit nach hinten bezüglich der Reihenfolge der Behälter verschoben werden, so ist ein Zwischenparken auf der Abstellstrecke 50 durchaus von Vorteil, da dann der Betrieb der Sortiervorrichtung 10' ungestört fortgesetzt werden kann. Die zwischengeparkte Gruppe kann zu einem geeigneten Zeitpunkt wieder in den Kreisel 12' integriert werden, um schließlich wiederum in die Hauptförderstrecke 14 integriert zu werden.

Es versteht sich, dass durch Vorsehen von mehreren, wie hier drei, Transfereinrichtungen die Anzahl der Möglichkeiten, wie Behälter in Bezug auf die Reihenfolge verschoben werden können, drastisch gesteigert wird.

Dies gilt umso mehr, wenn man es der Hauptförderstrecke 14 erlaubt, insbesondere stromaufwärts relativ zum Kreisel 12', abgebremst zu werden. Dann kann in der Sortiervorrichtung 10' eine sehr große Menge von Behältern relativ schnell umsortiert werden. Nach erfolgter Umsortierung kann die Förderung auf der Hauptförderstrecke wieder aufgenommen werden.

Von noch größerem Vorteil ist es, wenn die Förderstrecken in Segmente unterteilt sind, die mit einer variablen Geschwindigkeit, insbesondere beschleunigend oder abbremsende, betrieben werden können. Sowohl die Sortiervorrichtung 10' als auch die Hauptförderstrecke 14 können aus solchen Förderstreckensegmenten aufgebaut sein. Mit diesen Förderstreckensegmenten lassen sich Behälter beschleunigen und verlangsamen, so dass die zwischen den Behältern existierenden Lücken vergrößert oder verkleinert werden können.

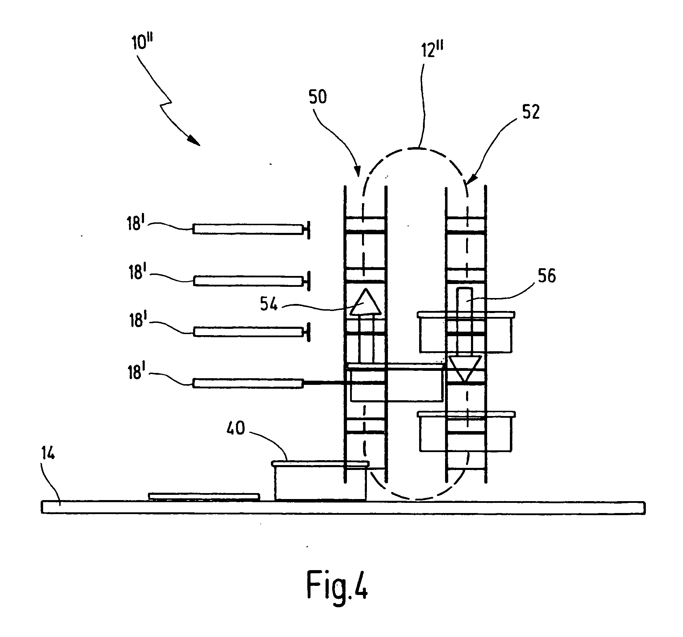

Bezug nehmend auf Fig. 4 ist eine schematische Seitenansicht einer weiteren Ausführungsform einer Sortiervorrichtung 10" gemäß der vorliegenden Erfindung gezeigt. Im Unterschied zu den bisher erläuterten Sortiervorrichtungen gemäß der vorliegenden Erfindung ist der Kreisel 12" in Fig. 4 in einer vertikalen Ebene relativ zu der Ebene der Hauptförderstrecke 14 angeordnet. Der Kreisel 12" der Sortiervorrichtung 10" besteht aus zwei Paternosteraufzügen 50 und 52. Der Paternoster 50 ist für die Aufwärtsbewegung von Behältern 40 verantwortlich. Der Paternoster 52 ist für die Abwärtsbewegung von Behältern 40 verantwortlich.

Seitlich und in unterschiedlichen Höhen sind mehrere Überschieber 18' angeordnet. Mit Hilfe der Überschieber 18' lassen sich Behälter 40 in unterschiedlichen Höhen vom Paternoster 50 zum Paternoster 52 bewegen.

Hat ein Behälter 40 eine vorbestimmte Höhe in Aufwärtsrichtung, wie sie mit Hilfe des Pfeils 54 angedeutet ist, erreicht, dann wird er von einem geeigneten Überschieber 18' auf den Paternoster 52 geschoben, um sich in Abwärtsrichtung (vgl. Pfeil 56) in Richtung der Hauptförderstrecke 14 zu bewegen, auf der die Behälter 40 im Beispiel der Fig. 4 von links nach rechts bewegt werden. Die Behälter befinden sich nach dem Sortiervorgang im Paternoster 52, je nach Sortierregel, in der Reihenfolge ansteigend oder abfallend eingelagert. Durch die Abwärtsbewegung des Paternosters 52 werden die vorsortierten Behälter wieder auf der Hauptförderstrecke 14 eingegliedert.

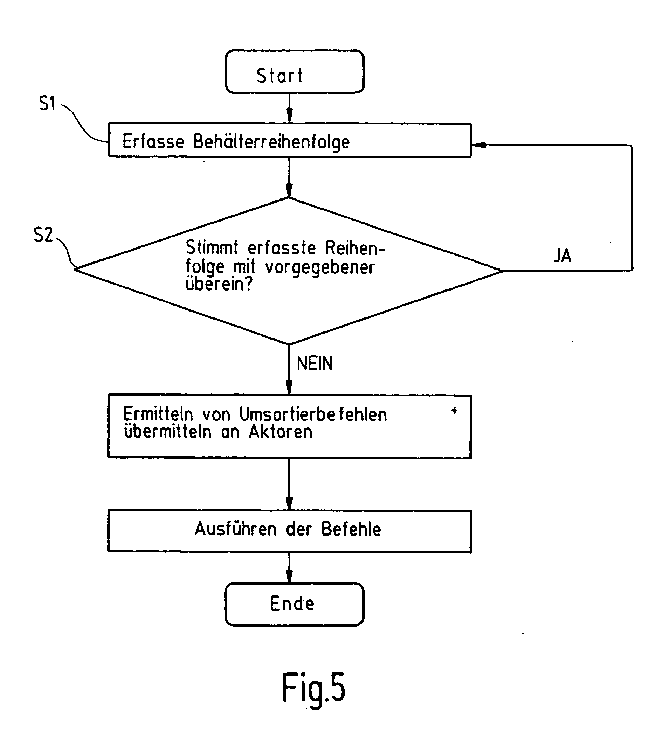

Nachfolgend wird unter Bezugnahme auf Fig. 5 ein Verfahren zum Sortieren gemäß der vorliegenden Erfindung beschrieben werden. In diesem Zusammenhang wird auch auf die bereits im Zusammenhang mit den Fig. 2a bis 2f erläuterten Umsortierverfahren verwiesen.

Gemäß dem erfindungsgemäßen Verfahren wird in einem ersten Schritt (S1) eine Reihenfolge von Behältern erfasst, die stromabwärts über eine Hauptförderstrecke befördert werden. In einem zweiten Schritt wird die erfasste Reihenfolge mit einer vorbestimmten Reihenfolge überprüft (vgl. S2). Sollten die Reihenfolgen nicht übereinstimmen, dann werden die falsch sortierten Behälter, für die die Reihenfolge nicht stimmt, in den Kreisel eingeschleust, Umsortierbefehle werden von einem Lagerverwaltungssystem ermittelt und an die Transfereinrichtung und/oder an die Ausschleusvorrichtung sowie die Einschleusvorrichtung übermittelt, um die Verschiebeaktionen zu bewirken.

Um einen Behälter nach "vorn" zu sortieren, werden alle umzusortierenden Behälter in den Kreisel eingeschleust. Unter Verwendung der verschiedenen Scanner werden die umzusortierenden Behälter an den Aktionspunkten, wie z.B. den Austauschpunkten und dem Einlasspunkt bzw. dem Auslasspunkt identifiziert. Wenn ein in der Reihenfolge nach vorn zu sortierender Behälter den zweiten Austauschpunkt erreicht, wird die Transfereinrichtung betätigt, um diesen Behälter vom zweiten Austauschpunkt zum ersten Austauschpunkt zu transportieren. Dort wird dieser Behälter dann wieder in die Hauptförderstrecke eingeschleust. Anderenfalls werden die Behälter, die nicht in der Reihenfolge nach vorn sortiert werden müssen, innerhalb des Kreisels zum Ausschleuspunkt des Kreisels transportiert, um sie dort auszuschleusen.

Alternativ können die umzusortierenden Behälter in einem Bereich des ersten Austauschpunkts identifiziert werden. Wenn ein in der Reihenfolge nach vorn zu sortierender Behälter den ersten Austauschpunkt erreicht, wird die Transfereinrichtung betätigt, um diesen Behälter vom ersten Austauschpunkt zum zweiten Austauschpunkt zu transportieren und um ihn dort in den Kreisel einzuschleusen. Dann wird er an den Ausschleuspunkt weitergeleitet, um dort wieder in die Hauptförderstrecke eingeleitet zu werden. Wenn ein Behälter den ersten Austauschpunkt erreicht, der in der Reihenfolge nicht nach vorn zu sortieren ist, wird dieser Behälter zum Einschleuspunkt des Kreisels weitergeleitet, um ihn dort einzuschleusen. Von dort wird er an den Ausschleuspunkt weitergeleitet, um ihn wiederum auszuschleusen.

Es versteht sich, dass viele verschiedene Behältertypen und Fördertechniktypen verwendet werden können, um die vorliegende Erfindung zu realisieren. Gleiches gilt für die Identifizierungsmittel, mit denen jedem Behälter eine individuelle Identnummer zugeordnet werden kann. Die Verwendung von Barcodes und Barcodelesern hat sich durchaus bewährt. Alternativ wäre jedoch unter anderem an die Transpondertechnologie zu denken.

## Patentansprüche

1. Vorrichtung (10; 10'; 10") zum Sortieren von ungeordneten Behältern (40) eines Kommissioniersystems gemäß einer vorbestimmten Reihenfolge, welches eine Hauptförderstrecke (14) umfasst, mit der die ungeordneten Behälter (40) innerhalb des Kommissioniersystems, insbesondere zu einem Kommissionierplatz hin oder in ein Behälterlager hinein, in einer Hauptförderrichtung (16) transportiert werden, und mit einem Förderstreckenkreisel (12; 12'), der über einen Einschleuspunkt (24) zum Einschleusen von Behältern (40) in den Förderstreckenkreisel (12; 12') und über einen Ausschleuspunkt (26) zum Ausschleusen von in dem Förderstreckenkreisel (12) befindlichen Behältern (40) mit der Hauptförderstrecke (14) verbindbar ist, **dadurch gekennzeichnet, dass** die vorrichtung mindestens eine Transfereinrichtung (18; 18') aufweist, die so innerhalb des Förderstreckenkreisels (12) angeordnet ist, dass Behälter (40) zwischen einem ersten Austauschpunkt (20) und einem zweiten Austauschpunkt (22) des Förderstreckenkreisels (12) austauschbar sind.

2. Vorrichtung nach Anspruch 1, wobei der Ausschleuspunkt (26) des Förderstreckenkreisels in Hauptförderrichtung (16) stromaufwärts relativ zum Einschleuspunkt (24) gelegen ist.

3. Vorrichtung nach Anspruch 1 oder 2, wobei der erste Austauschpunkt (20) in Hauptförderrichtung (16) zwischen dem Ausschleuspunkt (26) und dem Einschleuspunkt (24) liegt, und der zweite Austauschpunkt (22) zwischen dem Einschleuspunkt (24) und dem Ausschleuspunkt (26) liegt.

4. Vorrichtung nach einem der vorhergehenden Ansprüche, wobei die Hauptförderstrecke (14) einen Teil des Förderstreckenkreisels (12) bildet.

5. Vorrichtung nach einem der Ansprüche 1 bis 3, wobei der Förderstreckenkreisei (12) ein von der Hauptförderstrecke (14) unabhängiger, in sich geschlossener Kreisel (12) ist.

6. Vorrichtung nach einem der vorhergehenden Ansprüche, wobei der Förderstreckenkreisel (12) im Wesentlichen in einer horizontalen Ebene angeordnet ist.

7. Vorrichtung nach einem der vorhergehenden Ansprüche, wobei die Hauptförderstrecke (14) und der Förderstreckenkreisel (12) im Wesentlichen durch Rollbahnen, Gurtbänder oder Hängeförderer realisiert sind.

8. Vorrichtung nach einem der Ansprüche 1 bis 5, wobei der Förderstreckenkreisei (12) im Wesentlichen in einer vertikalen Ebene angeordnet ist.

9. Vorrichtung nach Anspruch 8, wobei der Förderstreckenkreisel (12) Patemosteraufzüge (50, 52) aufweist.

10. Vorrichtung nach einem der vorhergehenden Ansprüche, wobei die Transfereinrichtung (18; 18') ein Überschieber (18') ist, mit dem ein Behälter (40) zwischen den Austauschpunkten (20, 22) verschoben werden kann.

11. Vorrichtung nach einem der Ansprüche 1 bis 10, wobei die Transfereinrichtung (18; 18') Motor-betriebene Förderrollen (18) aufweist, die in zwei zueinander entgegengesetzten Richtungen (46) antreibbar sind.

12. Vorrichtung nach einem der vorhergehenden Ansprüche, wobei der Förderstreckenkreisel (12) ferner eine Abstellstrecke (50) aufweist, auf der zu sortierende Behälter (40) zwischengeparkt werden können.

13. Vorrichtung nach Anspruch 12, wobei der Förderstreckenkreisel (12) und die Abstellstrecke (50) jeweils Motor-betriebene Förderrollen aufweisen, die in zueinander entgegengesetzten Richtungen (48, 46) betrieben werden können.

14. Vorrichtung nach einem der vorhergehenden Ansprüche, wobei genau eine Transfereinrichtung (18) vorgesehen ist.

15. Kommissioniersystem mit einer Sortiervorrichtung nach einem der Ansprüche 1 bis 14 und mit einer Hauptförderstrecke (14), die an die Sortiervorrichtung (10) angeschlossen ist.

16. Kommissioniersystem nach Anspruch 15, das ferner stromaufwärts zur Sortiervorrichtung (10) eine erste Erfassungseinrichtung (28) aufweist, um eine Behälteridentifikation durchzuführen.

17. Kommmissioniersystem nach Anspruch 15 oder 16, das ein Lagerwaltungssystem zur Überprüfung einer vorbestimmten Behälterreihenfolge und, sollte die Reihenfolge falsch sein, zur Ausgabe von Sortieranweisungen an die Sortiervorrichtung aufweist.

18. Kommissioniersystem nach einem der Ansprüche 15 bis 17, das stromaufwärts relativ zum Einschleuspunkt (24) eine zweite Erfassungseinrichtung (30) aufweist.

19. Kommissioniersystem nach einem der Ansprüche 15 bis 18, das im Bereich des ersten Austauschpunkts (20) eine dritte Erfassungseinrichtung (32) aufweist.

20. Kommissioniersystem nach einem der Ansprüche 15 bis 19, das im Bereich des zweiten Austauschpunkts (22) eine vierte Erfassungseinrichtung (34) aufweist.

21. Sortierverfahren zum Ordnen von Behältern (40) gemäß einer vorbestimmten Reihenfolge in einem Kommissioniersystem, welches eine Sortiervorrichtung (10; 10'; 10") mit einem Förderstreckenkreisel (12; 12') und einer Transfereinrichtung (18; 18') aufweist, wobei der Förderstreckenkreisel (12; 12') über einen Einschleuspunkt (24) und einen Ausschleuspunkt (26) mit einer Hauptförderstrecke (14) des Kommissioniersystems verbunden ist **dadurch gekennzeichnet, dass** die Transfereinrichtung (18; 18') einen ersten Austauschpunkt (20; 20') und einen zweiten Austauschpunkt (22; 22') des Förderstreckenkreisels (12; 12') miteinander verbindet, wobei das Verfahren die folgenden Schritte aufweist:
(i) Erfassen (S1) einer Reihenfolge von Behältern (40), die stromabwärts über die Hauptförderstrecke (14) befördert werden;
(ii) Überprüfen (S2) der erfassten Reihenfolge mit einer vorbestimmten Reihenfolge;
(iii) sollten die Reihenfolgen nicht übereinstimmen, dann:
(a) Ausschleusen der Behälter (40), für die die Reihenfolge nicht stimmt, in den Förderstreckenkreisel (12; 12');
(b) Ermitteln von Umsortierbefehlen, um die Transfereinrichtung (18; 18') und/oder die Ausschleuseinrichtung (26) anzusteuern;
(c) Übermitteln der Umsortierbefehle an die Transfereinrichtung (18; 18') und/oder an die Ausschleuseinrichtung (26), und Ausführen derselben;
(iv) sollten die Reihenfolgen übereinstimmen, Zurückkehren zu Schritt "i".

22. Verfahren nach Anspruch 21, wobei das Ausführen der Umsortierbefehle umfasst:
- Einschleusen aller umzusortierenden Behälter (40) in den Kreisel (12);
- Identifizieren der umzusortierenden Behälter (40) im Bereich des zweiten Austauschpunkts (22);
- wenn ein in der Reihenfolge nach vorn zu sortierender Behälter (40) den zweiten Austauschpunkt (22) erreicht, Betätigen der Transfereinrichtung (18), um diesen Behälter (40) vom zweiten Austauschpunkt (22) zum ersten Austauschpunkt (20) zu transportieren und ihn dort wieder in die Hauptförderstrecke (14) einzuschleusen;
- anderenfalls Weiterleiten der Behälter (40), die nicht in der Reihenfolge nach vorn sortiert werden müssen, innerhalb des Kreisels (12) zum Ausschleuspunkt (26) des Kreisels (12); und
- Ausschleusen der Behälter (40), die sich noch innerhalb des Kreisels (12) befinden, über die Ausschleuseinrichtung (26) in die Hauptförderstrecke (14).

23. Verfahren nach Anspruch 21, wobei das Ausführen der Umsortierbefehle umfasst:
- Identifizieren der umzusortierenden Behälter (40) in einem Bereich des ersten Austauschpunkts (20);
- wenn ein in der Reihenfolge nach vorn zu sortierender Behälter (40) den ersten Austauschpunkt (20) erreicht, Betätigen der Transfereinrichtung (18), um diesen Behälter (40) vom ersten Austauschpunkt (20) zum zweiten Austauschpunkt (22) zu transportieren und um ihn so in den Kreisel (12) einzuschleusen und ihn an den Ausschleuspunkt (26) weiterzuleiten; anderenfalls Weiterleiten der Behälter (40), die in der Reihenfolge nicht nach vorn sortiert werden müssen, zum Einschleuspunkt (24) des Kreisels (12), um sie in den Kreisel (12) einzuschleusen und an den Ausschleuspunkt (26) weiterzuleiten; und
- Ausschleusen der am Ausschleuspunkt (26) befindlichen Behälter (40) in die Hauptförderstrecke (14).

24. Verfahren nach einem der Ansprüche 21 bis 23, wobei die Behälter (40) innerhalb des Kreisels (12) vorwärts und rückwärts verfahren werden.

25. Verfahren nach einem der Ansprüche 21 bis 24, wobei die Hauptförderstrecke (14) und der Förderstreckenkreisel (12) aus Förderstreckensegmenten aufgebaut sind, die mit variablen Fördergeschwindigkeiten betrieben werden, um die Behälter (40) beschleunigt oder verlangsamt zu transportieren, damit Lücken in der Reihenfolge der Behälter erzeugt oder geschlossen werden.

## Claims

1. Apparatus (10; 10'; 10") for sorting non-sorted containers (40) in accordance with a predetermined sequence in an order-picking system which comprises a main conveying track (14) by means of which the non-sorted containers (40) are transported within the order-picking system, in particular to an order-picking workstation or into a container store, in a main conveying direction (16), and a conveying-track circuit (12; 12'), which is connectable to the main conveying track (14) via an introduction point (24) for introducing containers (40) into the conveying-track circuit (12; 12') and via a discharge point (26) for discharging containers (40) which are located in the conveying-track circuit (12), **characterized in that** the apparatus has at least one transfer device (18; 18'), which is arranged within the conveying-track circuit (12) such that containers (40) can be exchanged between a first exchange point (20) and a second exchange point (22) of the conveying-track circuit (12).

2. Apparatus according to Claim 1, wherein the discharge point (26) of the conveying-track circuit is located upstream relative to the introduction point (24).

3. Apparatus according to Claim 1 or 2, wherein, as seen in the main conveying direction (16), the first exchange point (20) is located between the discharge point (26) and the introduction point (24), and the second exchange point (22) is located between the introduction point (24) and the discharge point (26).

4. Apparatus according to one of the preceding claims, wherein the main conveying track (14) forms part of the conveying-track circuit (12).

5. Apparatus according to one of Claims 1 to 3, wherein the conveying-track circuit (12) is a continuously closed circuit (12) which is independent of the main conveying track (14).

6. Apparatus according to one of the preceding claims, wherein the conveying-track circuit (12) is arranged essentially in a horizontal plane.

7. Apparatus according to one of the preceding claims, wherein the main conveying track (14) and the conveying-track circuit (12) are realized essentially by roller conveyors, belt conveyors or overhead conveyors.

8. Apparatus according to one of Claims 1 to 5, wherein the conveying-track circuit (12) is arranged essentially in a vertical plane.

9. Apparatus according to Claim 8, wherein the conveying-track circuit (12) comprises paternosters lifts (50, 52).

10. Apparatus according to one of the preceding claims, wherein the transfer device (18, 18') is a pusher (18') by means of which a container (40) can be shifted between the exchange points (20, 22).

11. Apparatus according to one of Claims 1 to 10, wherein the transfer device (18; 18') has motor-operated conveyor rollers (18) which can be driven in two opposite directions (46).

12. Apparatus according to one of the preceding claims, wherein the conveying-track circuit (12) further has a parking track (50) on which the containers (40) which are to be sorted can be parked on an interim basis.

13. Apparatus according to Claim 12, wherein the conveying-track circuit (12) and the parking track (50) each have motor-operated conveyor rollers which can be operated in opposite directions (48, 46).

14. Apparatus according to one of the preceding claims, wherein exactly one transfer device (18) is provided.

15. Order-picking system having a sorting apparatus according to one of Claims 1 to 14, and having a main conveying track (14) which is connected to the sorting apparatus (10).

16. Order-picking system according to Claim 15, which further has, upstream relative to the sorting apparatus (10), a first sensing means (28) for performing container identification.

17. Order-picking system according to Claim 15 or 16, having a warehouse-management system for checking a predetermined container sequence and, if the sequence is not correct, issuing sorting instructions to the sorting apparatus.

18. Order-picking system according to one of Claims 15 to 17 having a second sensing means (30) upstream of the introduction point (24).

19. Order-picking system according to one of Claims 15 to 18, having a third sensing means (32) in the region of the first exchange point (20).

20. Order-picking system according to one of Claims 15 to 19, having a fourth sensing means (34) in the region of the second exchange point (22).

21. Sorting method for organizing containers (40) in a predetermined sequence in an order-picking system which has a sorting apparatus (10; 10'; 10") including a conveying-track circuit (12; 12') and a transfer device (18; 18'), the conveying-track circuit (12; 12') being connected to a main conveying track (14) of the order-picking system via an introduction point (24) and a discharge point (26), **characterized in that** the transfer device (18; 18') connects a first exchange point (20; 20') and a second exchange point (22; 22') of the conveying-track circuit (12; 12') to one another, and the method having the following steps:
(i) sensing (S1) a sequence of containers (40) which are conveyed downstream via the main conveying track (14);
(ii) checking (S2) the sequence sensed in relation to a predetermined sequence;
(iii) if the sequences do not match, then:
(a) discharging into the conveying-track circuit (12; 12') the containers (40) for which the sequence is incorrect;
(b) determining re-sorting commands in order to activate the transfer device (18; 18') and/or the discharge device (26);
(c) communicating the re-sorting commands to the transfer device (18; 18') and/or to the discharge device (26), and executing these commands;
(iv) if the sequences match, returning to step "i".

22. Method according to Claim 21, wherein the execution of the re-sorting commands comprises:
- introducing into the circuit (12) all the containers (40) which are to be re-sorted;
- identifying in the region of the second exchange point (22) the containers (40) which are to be re-sorted;
- if a container (40) which is to be sorted to the front of the sequence reaches the second exchange point (22), actuating the transfer device (18) in order to transport this container (40) from the second exchange point (22) to the first exchange point (20) and to reintroduce it there into the main conveying track (14);
- otherwise within the circuit (12) passing the containers (40) which need not be sorted to the front of the sequence to the discharge point (26) of the circuit (12); and
- discharging into the main conveying track (14), via the discharge device (26), the containers (40) which are still located within the circuit (12).

23. Method according to Claim 21, wherein the execution of the re-sorting commands comprises:
- identifying in a region of the first exchange point (20) the containers (40) which are to be re-sorted;
- if a container (40) which is to be sorted to the front of the sequence reaches the first exchange point (20), actuating the transfer device (18) in order to transport this container (40) from the first exchange point (20) to the second exchange point (22) and thus to introduce it into the circuit (12) and advance it to the discharge point (26); otherwise passing to the introduction point (24) of the circuit (12) the containers (40) which need not be sorted to the front of the sequence, in order to introduce them into the circuit (12) and advance them to the discharge point (26); and
- discharging into the main conveying track (14) the containers (40) which are located at the discharge point (26).

24. Method according to one of Claims 21 to 23, wherein the containers (40) are driven forwards and rearwards within the circuit (12).

25. Method according to one of Claims 21 to 24, wherein the main conveying track (14) and the conveying-track circuit (12) are constructed from conveying-track segments which are operated at variable conveying speeds in order to transport the containers (40) in an accelerated or slowed-down state so that gaps are created or closed in the sequence of containers.

## Revendications

1. Dispositif (10 ; 10' ; 10") pour le tri, conformément à une séquence prédéterminée, de conteneurs (40) en désordre d'un système de préparation de commande qui comporte une voie de convoyage principale (14), avec laquelle les conteneurs (40) en désordre sont transportés au sein du système de préparation de commande dans une direction de convoyage principale (16), en particulier vers un emplacement de préparation de commande ou dans un entrepôt de conteneurs, et une boucle de voie de convoyage (12 ; 12'), qui peut être reliée avec la voie de convoyage principale (14) par l'intermédiaire d'un point d'insertion (24) pour l'insertion de conteneurs (40) dans la boucle de voie de convoyage (12, 12') et par l'intermédiaire d'un point d'éjection (26) pour l'éjection de conteneurs (40) se trouvant dans la boucle de voie de convoyage (12), **caractérisé en ce que** le dispositif présente au moins un dispositif de transfert (18 ; 18'), qui est agencé à l'intérieur de la boucle de voie de convoyage (12) de sorte que des conteneurs (40) puissent être échangés entre un premier point d'échange (20) et un deuxième point d'échange (22) de la boucle de voie de convoyage (12).

2. Dispositif selon la revendication 1, dans lequel le point d'éjection (26) de la boucle de voie de convoyage est placé en amont du point d'insertion (24) par rapport à la direction de convoyage principale (16).

3. Dispositif selon la revendication 1 ou 2, dans lequel le premier point d'échange (20) dans la direction de convoyage principale (16) se situe entre le point d'éjection (26) et le point d'insertion (24), et le deuxième point d'échange (22) se situe entre le point d'insertion (24) et le point d'éjection (26).

4. Dispositif selon l'une quelconque des revendications précédentes, dans lequel la voie de convoyage principale (14) forme une partie de la boucle de voie de convoyage (12).

5. Dispositif selon l'une quelconque des revendications 1 à 3, dans lequel la boucle de voie de convoyage (12) est une boucle fermée sur elle-même (12) indépendante de la voie de convoyage principale (14).

6. Dispositif selon l'une quelconque des revendications précédentes, dans lequel la boucle de voie de convoyage (12) est agencée essentiellement dans un plan horizontal.

7. Dispositif selon l'une quelconque des revendications précédentes, dans lequel la voie de convoyage principale (14) et la boucle de voie de convoyage (12) sont réalisées essentiellement grâce à des tapis roulants, des convoyeurs à bande souple ou des convoyeurs aériens.

8. Dispositif selon l'une des revendications 1 à 5, dans lequel la boucle de voie de convoyage (12) est agencée essentiellement dans un plan vertical.

9. Dispositif selon la revendication 8, dans lequel la boucle de voie de convoyage (12) présente des élévateurs en noria (50, 52).

10. Dispositif selon l'une quelconque des revendications précédentes, dans lequel le dispositif de transfert (18 ; 18') est un poussoir supérieur (18'), avec lequel un conteneur (40) peut être poussé entre les points d'échange (20, 22).

11. Dispositif selon l'une quelconque des revendications 1 à 10, dans lequel le dispositif de transfert (18 ; 18') présente des rouleaux de transport (18) entraînés par un moteur, qui peuvent être entrainés dans deux directions (46) opposées l'une à l'autre.

12. Dispositif selon l'une quelconque des revendications précédentes, dans lequel la boucle de voie de convoyage (12) présente en outre une voie de garage (50), sur laquelle des conteneurs (40) à trier peuvent être stationnés temporairement.

13. Dispositif selon la revendication 12, dans lequel la boucle de voie de convoyage (12) et la voie de garage (50) présentent respectivement des rouleaux de transport entraînés par un moteur, qui peuvent être mis en fonctionnement dans des directions (48, 46) opposées les unes aux autres.

14. Dispositif selon l'une quelconque des revendications précédentes, dans lequel est prévu précisément un dispositif de transfert (18).

15. Système de préparation de commande comportant un dispositif de tri selon l'une quelconque des revendications 1 à 14 et comportant une voie de convoyage principale (14) raccordée au dispositif de tri (10).

16. Système de préparation de commande selon la revendication 15, qui présente en outre un premier dispositif de détection (28) en amont du dispositif de tri (10), pour réaliser une identification de conteneur.

17. Système de préparation de commande selon la revendication 15 ou 16, qui présente un système de gestion de stock pour le contrôle d'une série prédéterminée de conteneurs et, si la série se révèle fausse, pour l'édition d'instructions de tri auprès du dispositif de tri.

18. Système de préparation de commande selon l'une quelconque des revendications 15 à 17, qui présente un deuxième dispositif de détection (30) en amont du point d'insertion (24).

19. Système de préparation de commande selon l'une quelconque des revendications 15 à 18, qui présente un troisième dispositif de détection (32) dans le secteur du premier point d'échange (20).

20. Système de préparation de commande selon l'une quelconque des revendications 15 à 19, qui présente un quatrième dispositif de détection (34) dans le secteur du deuxième point d'échange (22).

21. Procédé de tri pour l'ordonnancement de conteneurs (40) selon une séquence prédéterminée dans un système de préparation de commande, qui présente un dispositif de tri (10 ; 10' ; 10") comprenant une boucle de voie de convoyage (12 ; 12') et un dispositif de transfert (18 ; 18'), la boucle de voie de convoyage (12 ; 12') étant reliée avec une voie de convoyage principale (14) du système de préparation de commande par l'intermédiaire d'un point d'insertion (24) et d'un point d'éjection (26), **caractérisé en ce que** le dispositif de transfert (18 ; 18') relie un premier point d'échange (20 ; 20') et un deuxième point d'échange (22 ; 22') de la boucle de voie de convoyage (12 ; 12'), le procédé comportant les étapes ci-dessous consistant à :
(i) détecter (S1) une série de conteneurs (40), qui sont acheminés vers l'aval par l'intermédiaire de la voie de convoyage principale (14),
(ii) contrôler (S2) la série détectée par rapport à une série prédéterminée,
(iii) si les séries ne coïncident pas, alors :
(a) éjecter le conteneur (40), pour lequel la série ne correspond pas, dans le rond-point de voie de convoyage (12 ; 12'),
(b) déterminer des instructions de triage, pour commander le dispositif de transfert (18 ; 18') et/ou le dispositif d'éjection (26),
(c) transmettre les instructions de triage au dispositif de transfert (18 ; 18') et/ou au dispositif d'éjection (26), et réaliser celles-ci,
(iv) si les séries coïncident, retourner à l'étape "i".

22. Procédé selon la revendication 21, dans lequel la mise en oeuvre des instructions de triage comporte les étapes consistant à :
- insérer dans la boucle (12) tous les conteneurs (40) à trier,
- identifier les conteneurs (40) à trier dans le secteur du deuxième point d'échange (22),
- si un des conteneurs (40) à trier vers l'avant de la séquence atteint le deuxième point d'échange (22), actionner le dispositif de transfert (18), pour transporter ce conteneur (40) du deuxième point d'échange (22) au premier point d'échange (20) et l'y insérer à nouveau dans la voie de convoyage principale (14),
- dans les autres cas, rediriger les conteneurs (40), qui ne doivent pas être triés vers l'avant de la série, à l'intérieur de la boucle (12) vers le point d'éjection (26) de la boucle (12), et
- éjecter les conteneurs (40), qui se trouvent encore à l'intérieur de la boucle (12), dans la voie de convoyage principale (14) par l'intermédiaire du dispositif d'éjection (26).

23. Procédé selon la revendication 21, dans lequel la mise en oeuvre des instructions de triage comporte les étapes consistant à :
- identifier les conteneurs (40) à trier dans un secteur du premier point d'échange (20),
- si un conteneur (40) à trier vers l'avant de la série atteint le premier point d'échange (20), actionner le dispositif de transfert (18), pour transporter ce conteneur (40) du premier point d'échange (20) au deuxième point d'échange (22) et pour l'y insérer ainsi dans la boucle (12) et l'y rediriger au point d'éjection (26), dans les autres cas rediriger les conteneurs (40), qui ne doivent pas être triés vers l'avant de la série, vers le point d'insertion (24) de la boucle (12), pour les insérer dans la boucle (12) et les rediriger au point d'éjection (26), et
- éjecter les conteneurs (40) se trouvant au point d'éjection (26) dans la voie de convoyage principale (14).

24. Procédé selon l'une quelconque des revendications 21 à 23, dans lequel les conteneurs (40) sont déplacés vers l'avant et vers l'arrière à l'intérieur de la boucle (12).

25. Procédé selon l'une quelconque des revendications 21 à 24, dans lequel la voie de convoyage principale (14) et la boucle de voie de convoyage (12) sont constituées de segments de voie de convoyage, qui sont mis en fonctionnement avec des vitesses de convoyage variables, pour transporter les conteneurs (40) de manière accélérée ou ralentie, des intervalles dans la série des conteneurs étant ainsi créés ou supprimés.
